# FASCICULE DE BREVET EUROPEEN

(11) **EP 2 851 224 B1**
(45) Date de publication et mention de la délivrance du brevet: **22.04.2020**
(21) Numéro de dépôt: 14185073.5
(22) Date de dépôt: 17.09.2014
(51) Int. Cl.: B60H 1/00

(54) **Agencement de dispositif de conditionnement d'air pour véhicule automobile délimitant une conduite d'aspiration d'air transversale**
Anordnung einer Kraftfahrzeugklimaanlage welche einen quer verlaufenden Ansaugkanal begrenzt
Arrangement of a vehicle air conditioning unit delimiting a transversal intake duct

(30) Priorité: 19.09.2013 FR 1358991
(43) Date de publication de la demande: 25.03.2015
(73) Titulaire: VALEO SYSTEMES THERMIQUES, 78320 Le Mesnil Saint-Denis (FR)
(72) Inventeur: Loup, Didier, 78310 MAUREPAS (FR); Martinell, Amanda, 78640 NEAUPHLE LE CHATEAU (FR); Ailloud, Fabrice, 78280 GUYANCOURT (FR)
(74) Mandataire: Tran, Chi-Hai

(56) Documents cités:
- DE-A1-102009 057 870
- FR-A1- 2 558 131
- JP-A- S5 599 408

## Description

L'invention concerne un dispositif de conditionnement d'air de véhicule automobile comportant des moyens pour chauffer, ventiler et rafraîchir l'air de l'habitacle, afin notamment de réguler la température dans l'habitacle et de désembuer ses vitres.

### ARRIERE PLAN DE L'INVENTION

Un tel dispositif est généralement implanté entre les sièges avant et le tableau de bord du véhicule qu'il équipe. Il comporte un carter délimitant une enceinte interne ayant plusieurs entrées d'air et plusieurs sorties d'air, cette enceinte renfermant un évaporateur pour refroidir l'air et un radiateur pour le réchauffer.

Différents systèmes de volets et autres obturateurs ajustables sont également prévus pour régler les débits d'air dans l'évaporateur, dans le radiateur et dans les entrées et sorties d'air, de manière à réguler la température de l'air traité.

Un tel dispositif est avantageusement du type à double flux d'air : un flux d'air dit supérieur entre et sort par des entrées et sorties situées dans une portion supérieure de l'enceinte, et un flux d'air dit inférieur entre et sort par des entrées et sorties situées dans une portion inférieure de l'enceinte.

Deux systèmes de soufflerie distincts forcent la circulation des flux supérieur et inférieur de manière indépendante, pour que le flux supérieur traverse la portion supérieure de l'évaporateur et du radiateur, et pour que le flux inférieur traverse les portions inférieures de ces éléments.

Le flux supérieur permet par exemple de réguler la température dans la portion supérieure de l'habitacle et de désembuer les vitres avant du véhicule, alors que le flux inférieur permet par exemple de réguler la température dans la portion inférieure de l'habitacle.

Dans un tel agencement, l'air de l'un des flux, par exemple le flux inférieur, provient de l'intérieur de l'habitacle pour constituer la partie recyclée de l'air conditionné, ce qui permet de limiter la consommation énergétique nécessaire au maintien de l'habitacle à la température de consigne.

L'enceinte du dispositif est adossée et fixée à une paroi d'une zone centrale de la portion inférieure de la caisse du véhicule, au niveau de la jonction du pont ou tunnel et du tablier avant de la caisse.

Un tel dispositif de conditionnement d'air reste néanmoins volumineux et complexe à intégrer à l'habitacle du véhicule qu'il doit équiper, notamment du fait des différentes conduites nécessaires à l'aspiration et au refoulement de l'air, à quoi s'ajoute.

### OBJET DE L'INVENTION

Le but de l'invention est de proposer une solution pour remédier à cet inconvénient.

### RESUME DE L'INVENTION

A cet effet, l'invention a pour objet un agencement de système de conditionnement d'air de véhicule automobile, comprenant une enceinte renfermant un ou des échangeurs thermiques, des moyens de ventilation pour aspirer de l'air et forcer sa circulation dans cette enceinte à travers ses échangeurs thermiques, dans lequel l'enceinte est adossée et fixée à une paroi d'une zone centrale de la portion inférieure de la caisse du véhicule en étant localement espacée de cette paroi pour délimiter avec cette paroi une conduite amenant vers les moyens de ventilation de l'air prélevé en portion inférieure avant gauche et/ou avant droite de l'habitacle.

Cette solution permet ainsi d'ajouter une ou des conduites supplémentaires sans devoir ajouter de cloison ou de paroi additionnelle importante pour les délimiter, ce qui permet d'accroître la compacité du dispositif pour faciliter son intégration.

L'invention concerne également un agencement ainsi défini, dans lequel l'enceinte est adossée à la paroi constituant le pont et le tablier avant de la caisse du véhicule pour délimiter le long du tablier une portion de conduite transversale collectant de l'air provenant de la portion inférieure avant gauche et/ou avant droite de l'habitacle, et une portion de conduite longeant le pont pour amener cet air vers les moyens de ventilation.

L'invention concerne également un agencement ainsi défini, dans lequel l'enceinte est centrée dans l'habitacle, dans lequel les moyens de ventilation sont déportés latéralement par rapport à l'enceinte et dans lequel la conduite véhicule de l'air aspiré en portion inférieure de l'habitacle du côté opposé au côté des moyens de ventilation.

L'invention concerne également un agencement ainsi défini, dans lequel l'enceinte est adossée à la paroi formant le pont de la portion inférieure de la caisse en étant espacée de cette paroi pour délimiter une conduite s'étendant vers l'arrière du véhicule afin de collecter de l'air prélevé à l'arrière du véhicule.

### BREVE DESCRIPTION DES FIGURES

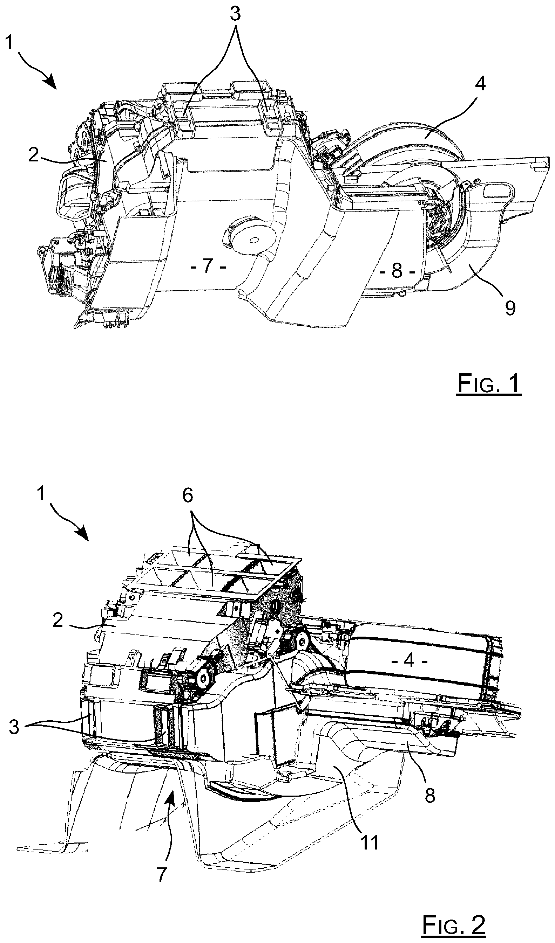

La figure 1 est une première vue d'ensemble de l'agencement selon l'invention montrant sa région inférieure ;
La figure 2 est une deuxième vue d'ensemble de l'agencement selon l'invention depuis un point de vue correspondant à celui du passager avant du véhicule.

### DESCRIPTION DETAILLEE DE L'INVENTION

L'idée à la base de l'invention est de délimiter une conduite conjointement par le bas de caisse du véhicule et par le carter délimitant l'enceinte du dispositif de reconditionnement.

Le dispositif de conditionnement selon l'invention qui est représenté dans les figures en y étant repéré par 1 comporte un carter ou enceinte 2 renfermant un évaporateur et un radiateur.

Cette enceinte 2 comporte une entrée d'air inférieure et deux sorties d'air inférieures 3, le flux inférieur étant admis par l'entrée inférieure avant de traverser l'évaporateur et le radiateur pour être refoulé par ces sorties inférieures 3.

La circulation du flux inférieur est forcée par une ventilation à volute 4 qui est ici déportée latéralement vers la droite par rapport à l'enceinte 2 qui est montée en position centrale dans le véhicule.

Cette ventilation à volute 4 est ainsi située au-dessus des pieds du passager avant du véhicule, et elle aspire par deux canalisations de l'air provenant de la région des pieds du conducteur et de la région des pieds du passager avant pour injecter cet air dans l'entrée inférieure de l'enceinte 2 afin de constituer le flux inférieur qui est ensuite refoulé par les sorties inférieures 3.

Le dispositif comporte également une entrée supérieure, non visible, alimentée par une autre ventilation, pour constituer le flux supérieur qui traverse aussi l'évaporateur et le radiateur, mais pour être refoulé par des sorties supérieures de l'enceinte, repérées par 6.

L'enceinte 2 est fixée à une zone centrale de la portion inférieure de la caisse du véhicule, de manière à s'étendre entre la planche de bord et l'espace entre les sièges avant gauche et droite du véhicule.

Cette zone centrale de la caisse qui est repérée par 7 dans les figures est une portion galbée s'étendant de part et d'autre de la jonction du pont ou tunnel avec le tablier avant. Le pont ou tunnel s'étend généralement tout le long de l'habitacle en formant une ondulation, il contribue à rigidifier la structure générale, et permet le passage et le maintien d'éléments mécaniques, de type tubulure d'échappement, organes de transmission ou autres s'étendent depuis l'avant jusqu'à l'arrière de ce véhicule en étant logés dans ce pont ou tunnel. Le tablier avant correspond à la paroi de tôle qui sépare l'habitacle de l'espace avant du véhicule dans lequel est généralement installé le moteur.

Le dispositif de ventilation 4 aspire l'air en partie inférieure gauche et droite de la région avant de l'habitacle au niveau d'un collecteur 8 qui est raccordé à deux canaux d'aspiration d'air repérés par 9 et 11. Le canal 9 s'étend vers la droite du collecteur 8 lorsque le dispositif est en place, pour aspirer de l'air situé au niveau des pieds du passager avant du véhicule.

Le canal 11 est agencé pour récupérer de l'air provenant de la région des pieds du conducteur qui est située de l'autre côté du pont 7 et de l'enceinte 2 vis-à-vis du collecteur 8, cet air transitant par une canalisation s'étendant entre l'enceinte 2 et la paroi 7.

Un espace de relativement faible épaisseur est prévu entre la paroi inférieure de l'enceinte 2 et le pont 7 auquel cette enceinte 2 est fixée, pour permettre le passage d'air de la partie gauche vers la partie droite à travers la conduite que délimite cet espace.

Cette conduite a sa face inférieure délimitée par la face supérieure de la paroi 7, et elle a sa face supérieure délimitée par la paroi inférieure de l'enceinte 2 qui est espacée de la paroi 7, et elle a sa face avant et sa face arrière qui sont délimitées par des nervures, non visibles dans les figures, qui dépassent de la paroi inférieure de l'enceinte 2 en s'étendant transversalement par rapport à la direction d'avancement du véhicule.

L'aspiration d'air par la volute 4, au niveau du collecteur 8 permet ainsi de collecter de l'air dans la région des pieds du conducteur, cet air cheminant par la conduite formée entre la paroi 7 et la paroi inférieure de l'enceinte 2 vers le collecteur 8. Cet air traverse ensuite la volute 4 avant d'être injecté dans la ou les entrées inférieures avant de l'enceinte 2.

En pratique, la face inférieure de l'enceinte 2 comporte des plots et des nervures transversales par lesquels elle vient en appui sur la face supérieure de la paroi 7 lorsque le dispositif est fixé à l'habitacle, de sorte que les nervures transversales délimitent avec la face inférieure de l'enceinte et la face supérieure de la paroi 7, la canalisation transversale.

L'enceinte 2 peut être fixée par-dessus les garnitures situées à la face supérieure de la paroi 7 qui est principalement une paroi en tôle recouverte au niveau du pont d'un revêtement de type tapis et qui est recouverte au niveau du tablier par un revêtement de type insonorisateur.

Dans l'exemple des figures, la conduite ménagée entre l'enceinte 2 et la paroi 7 s'étend principalement transversalement sur le pont dont elle épouse la forme, pour rapatrier vers le collecteur 8 de l'air prélevé de l'autre côté du pont.

Mais la conduite délimitée par l'espacement prévu entre la paroi 7 et le bas de l'enceinte 2 peut aussi avoir une forme générale correspondant à celle de la lettre T majuscule. Dans ce cas, une portion de conduite transversale longe le tablier avant pour collecter à chacune de ses extrémités de l'air, au niveau des portions inférieures avant gauche et avant droite de l'habitacle.

L'air collecté dans cette portion transversale est ensuite véhiculé dans une portion longitudinale de conduite délimitée elle aussi par la face supérieure du pont et par la face inférieure du bas de l'enceinte, pour être apporté au système de ventilation, soit directement, soit par l'intermédiaire d'un collecteur comme le collecteur 8.

La conduite ménagée entre la face supérieure de la paroi 7 et peut également s'étendre sur sensiblement toute la longueur par laquelle l'enceinte s'étend sur le pont 7, de façon à permettre la collecte d'air aspiré à l'arrière de l'habitacle, ou bien par exemple sous les sièges du conducteur.

## Revendications

1. Agencement de système de conditionnement d'air de véhicule automobile (1), comprenant une enceinte (2) renfermant un ou des échangeurs thermiques, des moyens de ventilation (4) pour aspirer de l'air et forcer sa circulation dans cette enceinte (2) à travers ses échangeurs thermiques, dans lequel l'enceinte (2) est adossée et fixée à une paroi (7) d'une zone centrale de la portion inférieure de la caisse du véhicule en étant localement espacée de cette paroi (7) pour délimiter avec cette paroi (7) une conduite amenant vers les moyens de ventilation (4) de l'air prélevé en portion inférieure avant gauche et/ou avant droite de l'habitacle.

2. Agencement selon la revendication 1, dans lequel l'enceinte (2) est adossée à la paroi (7) constituant le pont et le tablier avant de la caisse du véhicule pour délimiter le long du tablier une portion de conduite transversale collectant de l'air provenant de la portion inférieure avant gauche et/ou avant droite de l'habitacle, et une portion de conduite longeant le pont pour amener cet air vers les moyens de ventilation.

3. Agencement selon la revendication 1, dans lequel l'enceinte (2) est centrée dans l'habitacle, dans lequel les moyens de ventilation (4) sont déportés latéralement par rapport à l'enceinte (2) et dans lequel la conduite véhicule de l'air aspiré en portion inférieure de l'habitacle du côté opposé au côté des moyens de ventilation (4).

4. Agencement selon l'une des revendications 1 à 3, dans lequel l'enceinte (2) est adossée à la paroi formant le pont de la portion inférieure de la caisse en étant espacée de cette paroi pour délimiter une conduite s'étendant vers l'arrière du véhicule afin de collecter de l'air prélevé à l'arrière du véhicule.

## Patentansprüche

1. Anordnung einer Kraftfahrzeugklimaanlage (1), umfassend einen Raum (2), der einen oder mehrere Wärmetauscher, Lüftungsmittel (4) zum Ansaugen von Luft und Erzwingen ihrer Zirkulation in diesem Gehäuse (2) durch seine Wärmetauscher einschließt, wobei das Gehäuse (2) an eine Wand (7) eines mittleren Bereichs des unteren Teils des Aufbaus des Fahrzeugs anlehnt und daran fixiert ist, indem es von dieser Wand (7) lokal beabstandet ist, um mit dieser Wand (7) eine Leitung zu begrenzen, die am unteren Teil vorne links und/oder vorne rechts des Fahrzeuginnenraums entnommene Luft zu den Lüftungsmitteln (4) führt.

2. Anordnung nach Anspruch 1, wobei das Gehäuse (2) an die Wand (7) anlehnt, die die vordere und Spritzwand des Aufbaus des Fahrzeugs bildet, um entlang der Spritzwand einen Querleitungsteil, der von dem unteren Teil vorne links und/oder vorne rechts des Fahrzeuginnenraums stammende Luft sammelt, und einen Längsleitungsteil der Brücke zum Zuführen dieser Luft zu den Lüftungsmitteln zu begrenzen.

3. Anordnung nach Anspruch 1, wobei das Gehäuse (2) in dem Fahrzeuginnenraum zentriert ist, wobei die Lüftungsmittel (4) bezüglich des Gehäuses (2) seitlich versetzt sind und wobei die Leitung am unteren Teil des Fahrzeuginnenraums der der Seite der Lüftungsmittel (4) gegenüberliegenden Seite angesaugte Luft befördert.

4. Anordnung nach einem der Ansprüche 1 bis 3, wobei das Gehäuse (2) an die Wand anlehnt, die die Brücke des unteren Teils des Aufbaus bildet, indem es von dieser Wand beabstandet ist, um eine Leitung zu begrenzen, die sich nach hinten des Fahrzeugs erstreckt, um hinten am Fahrzeug entnommene Luft zu sammeln.

## Claims

1. Motor vehicle air-conditioning system arrangement (1), comprising an enclosure (2) containing one or more heat exchangers, ventilation means (4) for sucking in the air and forcing it to circulate in this enclosure (2) through its heat exchangers, in which the enclosure (2) is backed up against and fastened to a wall (7) of a central region of the lower portion of the vehicle body while being locally spaced apart from this wall (7) in order to delimit with this wall (7) a duct leading towards the ventilation means (4) for ventilating the air taken from the front left and/or front right lower portion of the cabin.

2. Arrangement according to Claim 1, in which the enclosure (2) is backed up against the wall (7) constituting the bridge and the front bulkhead of the vehicle body in order to delimit along the bulkhead a transverse duct portion collecting the air from the front left and/or front right lower portion of the cabin, and a duct portion extending along the bridge to bring this air towards the ventilation means.

3. Arrangement according to Claim 1, in which the enclosure (2) is centred in the cabin, in which the ventilation means (4) are offset laterally with respect to the enclosure (2) and in which the duct conveys the air sucked in the lower portion of the cabin on the opposite side to the ventilation means (4) side.

4. Arrangement according to one of Claims 1 to 3, in which the enclosure (2) is backed up against the wall forming the bridge of the lower portion of the body while being spaced apart from this wall in order to delimit a duct extending towards the rear of the vehicle in order to collect the air taken from the rear of the vehicle.
